# EUROPEAN PATENT APPLICATION

(11) **EP 3 376 556 A1**
(43) Date of publication of application: **19.09.2018**
(21) Application number: 16874736.8
(22) Date of filing: 30.11.2016
(51) Int. Cl.: H01M 2/10, H01M 10/613, H01M 10/625, H01M 10/6568, H01M 10/6556

(54) **TRAY, POWER BATTERY PACK AND ELECTRIC VEHICLE**

(30) Priority: 16.12.2015 CN 201521048819 U; 16.12.2015 CN 201521053155 U
(71) Applicant: BYD Company Limited, Shenzhen, Guangdong 518118 (CN)
(72) Inventor: TAN, Jing, Shenzhen Guangdong 518118 (CN); ZHENG, Weixin, Shenzhen Guangdong 518118 (CN)
(74) Representative: Hoffmann Eitle
(86) International application number: PCT/CN2016/108087
(87) International publication number: WO 2017/101679

(57) **Abstract**

The present invention provides a tray, a power battery pack, and an electric vehicle. The power battery pack includes a tray, a single cell, and a seal cover. A mounting space is formed between the tray and the seal cover, and the single cell is mounted in the mounting space. A heat dissipation channel is formed on the tray. The power battery pack provided in the present invention has a simpler structure, lower costs, a simple and convenient mounting process, and higher space utilization. Heat can be directly dissipated through the tray and be dissipated through the heat dissipation channel.

## Description

### BACKGROUND

### Technical Field

The present invention relates to the field of electric vehicles, and in particular, to a power battery pack for an electric vehicle.

### Related Art

As is known to all, a power battery pack is one of core components of an electric vehicle, and its safety performance and endurance performance are particularly important. A cooling system is usually disposed on the power battery pack. The cooling system can cool the power battery pack, to prevent battery overheating, to avoid an accident.

Currently, an existing power battery pack generally includes a tray mounted on an electric vehicle and several battery modules mounted in the tray. The battery module includes a housing and several single cells mounted in the housing. A cooling system includes a liquid cooling plate. The liquid cooling plate is disposed on the tray. The battery module is disposed on the liquid cooling plate. An existing liquid cooling plate generally includes two layers of metal plates. The two layers of metal plates are connected through brazing. The liquid cooling plate is communicated with inlet and outlet pipelines of a cooling liquid through brazing. Alternatively, the liquid cooling plate includes a plurality of liquid cooling plate modules, and the liquid cooling plate modules are connected through splicing. The cooling system requires an additional liquid cooling plate, which results in high costs and occupies large space, and leads to poor space utilization in the power battery pack. Moreover, the cooling form is undiversified and the cooling effect is poor.

### SUMMARY

The present invention is intended to resolve at least one of the technical problems in the related art to some extent. To this end, the present invention provides a tray, a power battery pack, and an electric vehicle.

A first aspect of the present invention provides a tray, where a heat dissipation channel is formed on the tray.

Preferably, a cooling liquid is injected into the heat dissipation channel.

Preferably, a pipe groove is formed on the tray, and the heat dissipation channel includes a liquid cooling pipe; a cooling liquid inlet and a cooling liquid outlet are formed on two ends of the liquid cooling pipe; and the liquid cooling pipe is welded or sealed in the pipe groove. In this way, a structure is simpler, and a process is easy to implement.

Preferably, the tray includes a bottom plate and a side plate, and the pipe groove is formed on the bottom plate of the tray.

Preferably, the bottom plate includes an inner surface and a bottom surface, and the pipe groove is formed on the bottom surface.

Preferably, the liquid cooling pipe is a flattened integrated metal pipeline.

Preferably, the cooling liquid inlet and the cooling liquid outlet of the liquid cooling pipe are led out from the side plate.

Preferably, a fastening portion for fastening the tray to an electric vehicle is disposed on the tray.

The heat dissipation channel is integrated with the tray provided in the present invention, so that no additional liquid cooling plate is required, a structure is simpler, costs are lower, and a mounting process is simple and convenient.

A second aspect of the present invention provides a power battery pack, including a tray, a single cell, and a seal cover, where a mounting space is formed between the tray and the seal cover, and the single cell is mounted in the mounting space.

Preferably, the single cell is directly adhered to an inner surface of a bottom plate of the tray by using an electrically insulative and thermally conductive adhesive. In this way, the single cell is simply and reliably fastened, space utilization is higher, and heat produced by the single cell is directly transferred to the bottom plate of the tray by the electrically insulative and thermally conductive adhesive, so that heat transfer efficiency is higher.

In the power battery pack provided in the present invention, a heat dissipation channel is integrated with the tray, so that no additional liquid cooling plate is required, a structure is simpler, costs can be effectively reduced, and a mounting process is simple and convenient. Without a liquid cooling plate, space utilization in the power battery pack is higher. Heat can be directly dissipated through the tray and be dissipated through the heat dissipation channel. In a non-critical environment, heat can be directly dissipated through the tray without starting the heat dissipation channel for heat dissipation (that is, heat exchange using a cooling liquid is not needed). The heat dissipation channel is started for heat dissipation only when heat produced in the power battery pack cannot be completely dissipated through the tray.

A third aspect of the present invention provides an electric vehicle, where the electric vehicle includes the power battery pack above.

In the tray for a power battery, the power battery pack, and the electric vehicle provided in the present invention, the heat dissipation channel is directly integrated with the tray for heat dissipation, so that no additional liquid cooling plate is required, a structure is simpler, costs can be effectively reduced, and a mounting process is simple and convenient. Without a liquid cooling plate, space utilization in the power battery pack is higher. Heat can be directly dissipated through the tray and be dissipated through the heat dissipation channel in a liquid cooling manner. In a non-critical environment, heat can be directly dissipated through the tray without starting the heat dissipation channel for heat dissipation in a liquid cooling manner (that is, heat exchange using a cooling liquid is not needed). The heat dissipation channel is started for heat dissipation only when heat produced in the power battery pack cannot be completely dissipated through the tray.

### BRIEF DESCRIPTION OF THE DRAWINGS

FIG. 1 is a schematic exploded view of a power battery pack according to the present invention;
FIG. 2 is a schematic overall diagram of a power battery pack according to the present invention;
FIG. 3 is a schematic rear view showing that a liquid cooling pipe is welded on a bottom surface of a bottom plate of a tray according to the present invention; and
FIG. 4 is a schematic front view showing that a liquid cooling pipe is welded on a bottom surface of a bottom plate of a tray according to the present invention.

### Reference numerals:

1: tray; 2: single cell; 3: seal cover; 4: liquid cooling pipe; 10: bottom plate; 11: side plate; 12: fastening portion; 13: pipe groove; 101: inner surface; 102: bottom surface; 4a: cooling liquid inlet; and 4b: cooling liquid outlet.

### DETAILED DESCRIPTION

To make the resolved technical problems, technical solutions, and beneficial effects of the present invention clearer and more comprehensible, the following further describes the present invention in detail with reference to the accompanying drawings and embodiments. It should be understood that the described specific embodiments are only used to explain the present invention rather than to limit the present invention.

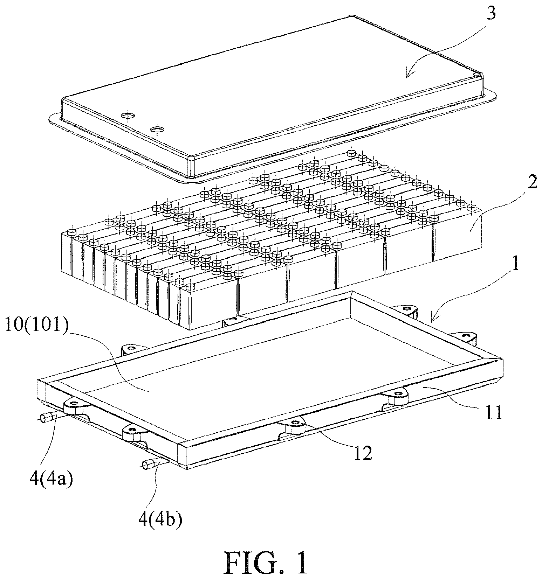

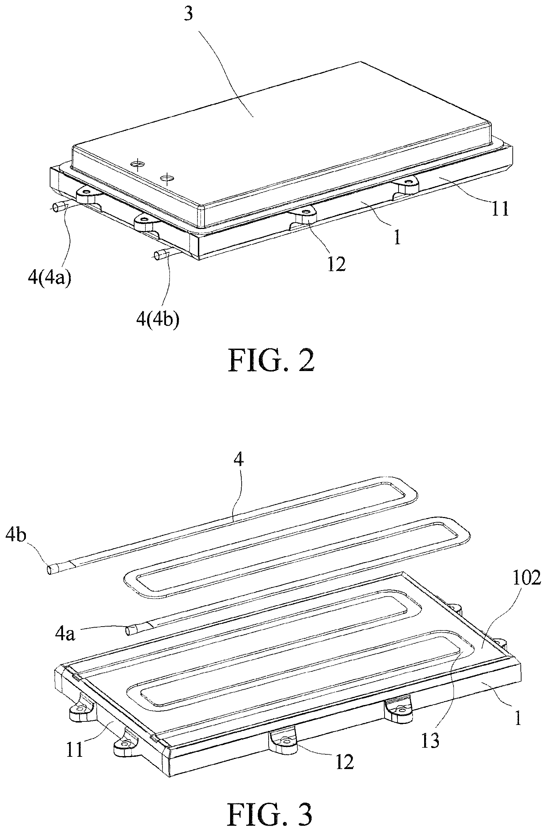

A tray and a power battery pack with the tray mounted according to the present invention are specifically described below. As shown in FIG. 1 and FIG. 2, the power battery pack includes a tray 1, a single cell 2, and a seal cover 3. A mounting space is formed between the tray 1 and the seal cover 3, and the single cell 2 is mounted in the mounting space. The single cell 2 may be directly mounted in the mounting space. Alternatively, there may be a plurality of single cells 2, the plurality of single cells 2 are assembled as a battery module, and then the battery module is mounted in the mounting space. The single cell 2 is known, and is designed depending on power that the power battery pack needs to output and the like. For example, in this embodiment, the single cell 2 is a square battery having a capacity of 20 Ah (amp-hr) and a rated voltage of 3.2 V (volt).

A heat dissipation channel is formed on the tray 1. A cooling liquid is injected into the heat dissipation channel. The cooling liquid is generally water or oil, or may be a refrigerant.

Generally, a battery management system is disposed inside or outside of the power battery pack, which is known and not further described.

The tray 1 is a carrier used to hold the single cell 2 and fasten the power battery pack to an electric vehicle. The tray 1 is made of a metal material with excellent thermal conductivity.

The heat dissipation channel is a channel, a pipeline, or the like that can accommodate the cooling liquid and transfer heat to outside. A specific form and manufacturing process thereof are not particularly limited, provided that heat exchange can be performed by using the cooling liquid.

In this embodiment, the heat dissipation channel is integrated with the tray, so that when the power battery pack is mounted, no additional liquid cooling plate is required, a structure is simpler, costs can be effectively reduced, and a mounting process is simple and convenient.

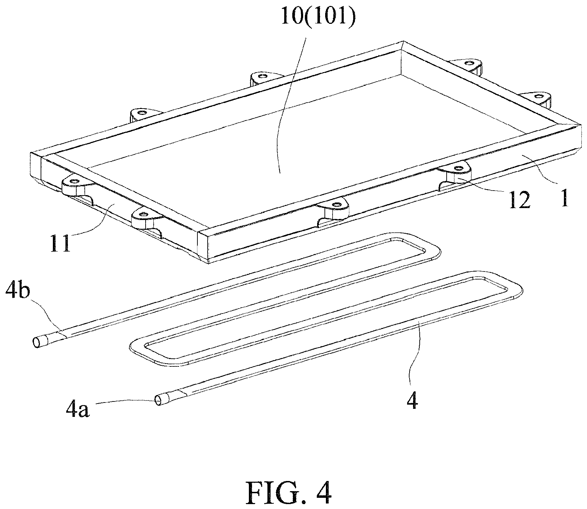

This embodiment provides a specific heat dissipation channel, as shown in FIG. 3 and FIG. 4. A pipe groove 13 is formed on the tray 1. The heat dissipation channel includes a liquid cooling pipe 4. A cooling liquid inlet 4a and a cooling liquid outlet 4b are formed on two ends of the liquid cooling pipe 4. The liquid cooling pipe 4 is welded or sealed in the pipe groove 13. There may be one or more liquid cooling pipes 4, and a specific position of the pipe groove 13 is not particularly limited, provided that heat produced by the single cell 2 can be transferred to outside. In this embodiment, the liquid cooling pipe 4 is welded in the pipe groove 13. In this way, a structure is simpler, and a process is easy to implement. The cooling liquid inlet 4a and the cooling liquid outlet 4b are separately communicated with an external cooling liquid loop of the power battery pack, and implement heat exchange in conjunction with the external cooling liquid loop. For example, when a relatively large amount of heat is produced in the power battery pack, the cooling liquid transfers heat produced in the power battery pack to outside through the cooling liquid loop, and after cooled by heat exchange in the external cooling liquid loop, the cooling liquid returns to the liquid cooling pipe 4 in the power battery pack. The power battery pack is cooled in such a cyclical manner. If the power battery pack is in a low-temperature environment, a heated cooling liquid may be input to the liquid cooling pipe 4 in the power battery pack through the external cooling liquid loop, to heat the power battery pack.

As shown in FIG. 3 and FIG. 4, the tray 1 includes a bottom plate 10 and four side plates 11. The pipe groove 13 may be formed on the bottom plate 10 of the tray 1. In a preferred manner, the pipe groove 13 may be formed on the bottom plate 10. Alternatively, the pipe groove 13 may be formed on the side plate 11. Certainly, it is feasible to form the pipe groove 13 only on the side plate 11 and fasten the liquid cooling pipe 4 in the pipe groove 13 on the side plate 11, but the effect is not as good as the preferred manner. In this embodiment, the pipe groove 13 is formed on the bottom plate 10 of the tray 1.

Specifically, the bottom plate 10 includes an inner surface 101 and a bottom surface 102. The pipe groove 13 may be formed on the inner surface 101 of the bottom plate 10, or may be formed on the bottom surface 102 of the bottom plate 10. In this embodiment, the pipe groove 13 is formed on the bottom surface 102.

The liquid cooling pipe 4 fits the pipe groove 13 in shape, which may be a regular shape, or may be an irregular shape. For example, the liquid cooling pipe 4 and the pipe groove 13 are serpentine.

The liquid cooling pipe 4 is a flattened integrated metal pipeline. For example, the liquid cooling pipe 4 is formed by flattening a copper pipe, an aluminum pipe, or another heat-conductive metal pipe. The aluminum pipe is selected first when heat dissipation efficiency is satisfied, because the aluminum pipe is lighter in weight. The size of the liquid cooling pipe 4 needs to be designed depending on a required cooling capability. When the power battery pack has more single cells 2, more heat is generated, a cooling requirement is higher, and the liquid cooling pipe 4 may be set to have a larger cross-sectional area and to be longer. For example, in this embodiment, the liquid cooling pipe 4 has a cross-sectional area of approximately 350 mm². A pipe wall of the liquid cooling pipe 4 is 1.5 mm to 1.8 mm thick.

The cooling liquid inlet 4a and the cooling liquid outlet 4b of the liquid cooling pipe 4 are generally led out from the side plate 11, for example, led out from a same side plate 11 of the tray 1, or respectively led out from two opposite side plates 11 of the tray 1, or respectively led out from two adjacent side plates 11 of the tray 1. In this embodiment, the cooling liquid inlet 4a and the cooling liquid outlet 4b are led out from a same side plate 11.

The manner in which a plurality of single cells 2 are assembled as a battery module and then the battery module is mounted on the tray 1 occupies more space and results in low space utilization. Therefore, in the present invention, the plurality of single cells 2 are directly adhered to the inner surface 101 of the bottom plate 10 of the tray 1 by using an electrically insulative and thermally conductive adhesive. In this way, the plurality of single cells 2 are simply and reliably fastened, space utilization is higher, and heat produced by the plurality of single cells 2 is directly transferred to the bottom plate 10 of the tray 1 by the electrically insulative and thermally conductive adhesive, so that heat transfer efficiency is higher.

As shown in FIG. 1 to FIG. 4, a fastening portion 12 for fastening the tray 1 to an electric vehicle is disposed on the tray 1. A screw hole (not marked in the figure) is formed on the fastening portion 12. The tray 1 is fastened to the electric vehicle through engagement between a bolt and the screw hole.

In the power battery pack provided in this embodiment, the heat dissipation channel is integrated with the tray 1, so that no additional liquid cooling plate is required, a structure is simpler, costs can be effectively reduced, and a mounting process is simple and convenient. Without a liquid cooling plate, space utilization in the power battery pack is higher. Heat can be directly dissipated through the tray 1 and be dissipated through the heat dissipation channel. In a non-critical environment, heat can be directly dissipated through the tray 1 without starting the heat dissipation channel for heat dissipation (that is, heat exchange using a cooling liquid is not needed). The heat dissipation channel is started for heat dissipation only when heat produced in the power battery pack cannot be completely dissipated through the tray 1.

The present invention further provides an electric vehicle, including the power battery pack in the foregoing embodiment. The power battery pack is generally fastened to a bottom portion of the electric vehicle. If the electric vehicle is an electric bus, the power battery pack may alternatively be fastened to a top portion of the electric vehicle, or at another mounting position. The present invention improves only the power battery pack on the electric vehicle, rather than other structures on the electric vehicle and arrangement of the electric vehicle. The power battery pack has been specifically explained in the foregoing embodiment. Therefore, no further description is provided.

In the electric vehicle provided in the present invention, the power battery pack includes the tray 1, and the heat dissipation channel is integrated with the tray 1, so that no additional liquid cooling plate is required, a structure is simpler, costs can be effectively reduced, and a mounting process is simple and convenient. Without a liquid cooling plate, space utilization in the power battery pack is higher. Heat can be directly dissipated through the tray 1 and be dissipated through the heat dissipation channel. In a non-critical environment, heat can be directly dissipated through the tray 1 without starting the heat dissipation channel for heat dissipation (that is, heat exchange using a cooling liquid is not needed). The heat dissipation channel is started for heat dissipation only when heat produced in the power battery pack cannot be completely dissipated through the tray 1.

The foregoing descriptions are merely preferred embodiments of the present invention, but are not intended to limit the present invention. Any modification, equivalent replacement, or improvement made within the spirit and principle of the present invention shall fall within the protection scope of the present invention.

## Claims

1. A tray, wherein a heat dissipation channel is formed on the tray.

2. The tray according to claim 1, wherein a cooling liquid is injected into the heat dissipation channel.

3. The tray according to claim 2, wherein a pipe groove is formed on the tray, and the heat dissipation channel includes a liquid cooling pipe; a cooling liquid inlet and a cooling liquid outlet are formed on two ends of the liquid cooling pipe; and the liquid cooling pipe is welded or sealed in the pipe groove.

4. The tray according to claim 3, wherein the tray includes a bottom plate and a side plate, and the pipe groove is formed on the bottom plate of the tray.

5. The tray according to claim 4, wherein the bottom plate includes an inner surface and a bottom surface, and the pipe groove is formed on the bottom surface.

6. The tray according to claim 4, wherein the liquid cooling pipe is a flattened integrated metal pipeline.

7. The tray according to claim 6, wherein the cooling liquid inlet and the cooling liquid outlet of the liquid cooling pipe are led out from the side plate.

8. The tray according to claim 6, wherein a fastening portion for fastening the tray to an electric vehicle is disposed on the tray.

9. A power battery pack, comprising a tray, a single cell, and a seal cover, wherein a mounting space is formed between the tray and the seal cover, and the single cell is mounted in the mounting space;
wherein the tray is the tray according to any one of claims 1 to 8.

10. The power battery pack according to claim 9, wherein the single cell is directly adhered to an inner surface of a bottom plate of the tray by using an electrically insulative and thermally conductive adhesive.

11. An electric vehicle, comprising the power battery pack according to claims 9 or 10.
